Europäisches Patentamt

European Patent Office

Office européen des brevets

(11) Veröffentlichungsnummer: **0 217 781**
**A2**

## (12) EUROPÄISCHE PATENTANMELDUNG

(21) Anmeldenummer: **86890240.4**

(22) Anmeldetag: **27.08.86**

(51) Int. Cl.⁴: **B 01 D 17/02**

(30) Priorität: **25.09.85 AT 2798/85**

(43) Veröffentlichungstag der Anmeldung:
**08.04.87 Patentblatt 87/15**

(84) Benannte Vertragsstaaten:
**AT BE CH DE FR GB IT LI LU NL SE**

(71) Anmelder: **VOEST-ALPINE Aktiengesellschaft**
**Friedrichstrasse 4**
**A-1011 Wien (AT)**

(72) Erfinder: **Cvitas, Vilim, Dipl.-Ing.**
**Wöberweg 8**
**A-4060 Leonding (AT)**

**Faltejsek, Karl, Dipl.-Ing.**
**Lüfteneggerstrasse 6**
**A-4020 Linz (AT)**

**Hanke, Reinhart, Dipl.-Ing.**
**Annaberggasse 2**
**A-8700 Leoben (AT)**

**Klinar, Gottfried**
**Alpenstrasse 33**
**A-8707 Leoben (AT)**

(74) Vertreter: **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

(54) **Einrichtung zum kontinuierlichen Trennen von flüssigen Phasen unterschiedlicher Dichte.**

(57) Die Einrichtung zum kontinuierlichen Trennen von flüssigen Phasen unterschiedlicher Dichte besteht aus einem Abscheidebecken (1), in welchem Trennwände (5) heb- und senkbar zueinander bewegbar oder aber schwenkbar angeordnet sind. Die Verschwenkung der Trennwände (5) erfolgt um eine exzentrisch angeordnete Achse (7) in einer Weise, daß beim Verschwenken gleichzeitig ein Absenken oder Anheben der Trennwände (5) erfolgt. Die Trennwände (5) sind durch Schubstangen (8) antreibbar und auf diese Weise gegenläufig schwenkbar. Bei der Verschwenkung der Trennwände (5) in eine Richtung wird der Flüssigkeitsspiegel in der zwischen den Trennwänden definierten Kammer angehoben, und in der benachbarten Kammer abgesenkt, wobei der spezifisch leichtere Anteil über die tiefer liegende Oberkante der einen Trennwand in eine Richtung (11) und der spezifisch schwerere Anteil unterhalb der Unterkante der anderen Trennwand (5) in Richtung des Pfeiles (12) in entgegengesetzter Richtung abströmen kann. Die gesonderten Phasen werden an den Stirnseiten des Abscheidebeckens (1) aufgefangen. Der Zufluß erfolgt über eine Aufgabeeinrichtung (10) etwa mittig in das Abscheidebecken (1).

FIG. 1

**Beschreibung**

Einrichtung zum kontinuierlichen Trennen von flüssigen Phasen unterschiedlicher Dichte

Die Erfindung bezieht sich auf eine Einrichtung zum kontinuierlichen Trennen von flüssigen Phasen unterschiedlicher Dichte.

Es sind eine Reihe von kontinuierlichen und diskontinuierlichen Dekantiervorrichtungen bekannt, bei welchen die aufschwimmende Phase gesondert von der schwereren darunterliegenden Phase abziehbar ist. Diskontinuierlich arbeitende Einrichtung sind hiebei relativ einfach, da es in diesen Fällen genügt, die jeweils darunterliegende Phase bis zur Phasentrenngrenze abzulassen. Anschließend kann die aufschwimmende Phase über den gleichen Auslaß abgezogen werden. Bei Verwendung von Überlaufwehren für das Abziehen von aufschwimmenden Phasen ist bei kontinuierlichem Zulauf die Phasentrennung nur bei sehr groß bauenden Einrichtungen gewährleistet, und für die Kontrolle der exakten Lage der Phasengrenze sind eine Reihe von aufwendigen Einrichtungen erforderlich. Eine exakte Phasentrennung ist bei diesen Einrichtungen in der Regel nur dann möglich, wenn Trübungssensoren im Inneren eines Beckens angeordnet sind, um die genaue Lage der Phasengrenzfläche bestimmen zu können.

Die Erfindung zielt nun darauf ab, eine einfache und kompakte Einrichtung der eingangs genannten Art zu schaffen, bei welcher ohne zusätzliche Hilfsmittel eine relativ exakte Phasentrennung möglich ist. Im besonderen soll die erfindungsgemäße Einrichtung für die Abscheidung von Ölphasen aus wässerigen Lösungen geeignet sein. Zur Lösung dieser Aufgabe besteht die Erfindung im wesentlichen darin, daß in einem Becken quer zur Strömungsrichtung orientierte Trennwände angeordnet sind, daß in Strömungsrichtung benachbarte Trennwände gegenläufig heb- und senkbar und abwechselnd zueinander und voneinander weg bewegbar oder gegenläufig schwenkbar antreibbar sind, daß der Hubantrieb bzw. die Schwenkachsen der Trennwände so angeordnet sind, daß in einer Endlage des Schwenkbereiches oder Hubes der Trennwände die Unterkanten der Trennwände am Boden des Beckens dichtend anliegen und in anderen Schwenkstellungen oder Hubstellungen einen Durchflußquerschnitt freigeben und daß zu beiden Stirnseiten des Beckens Abflüsse für die getrennten Phasen angeordnet sind. Dadurch, daß in einem Becken eine Mehrzahl von Trennwänden angeordnet sind, werden einzelne Kammern ausgebildet, wobei in jeder einzelnen dieser Kammern eine Phasentrennung stattfindet. Dadurch, daß nun die Trennwände abwechselnd zueinander und voneinander weg bewegbar sind bzw. gegenläufig schwenkbar antreibbar sind, wird abwechselnd in benachbarten Kammern der Flüssigkeitsspiegel angehoben und abgesenkt. Wenn nun gleichzeitig jeweils eine der beiden Trennwände abgesenkt und die andere angehoben wird, ergibt sich zwischen benachbarten Kammern ein hydrostatisches Druckgefälle, welches einen gerichteten Transport der beiden Phasen in entgegengesetzte Richtung ermöglicht. Durch Anheben einer Trennwand bzw. durch Verschwenken einer Trennwand um eine Schwenkachse, welche bei Verschwenken an der Unterkante der Trennwand einen Durchtrittsquerschnitt ausbildet, läßt sich erreichen, daß aus der Kammer mit dem höheren Flüssigkeitsspiegel die spezifisch schwerere Phase im Bereich nahe dem Boden durchtritt, wohingegen die spezifisch leichtere Phase über die benachbarte und in diesem Zustand abgesenkte Trennwand in die benachbarte Kammer überströmen kann. Diese benachbarte Trennwand liegt in dieser abgesenkten Hub- bzw. Schwenkstellung dichtend am Boden des Beckens an, so daß die Strömung der spezifisch leichteren Phase entgegengesetzt der Strömung der spezifisch schwereren Phase erfolgt. Mit einer derartigen Einrichtung läßt sich bei verhältnismäßig kleinen Baumaßen ein hohes Maß an Trennung der Phasen erzielen, und es ist der kontinuierliche Zufluß zu einer derartigen Einrichtung ohne weiteres möglich. In bevorzugter Weise ist hiefür die Aufgabeeinrichtung für die zu trennenden Phasen mittig zwischen den zu beiden Stirnseiten des Beckens angeordneten Abflüssen für die spezifisch schwerere bzw. leichtere Phase angeordnet.

Die bevorzugte Ausbildung der erfindungsgemäßen Einrichtung, welche mit einem verhältnismäßig einfachen Antrieb auskommt, ist hiebei so ausgebildet, daß die Trennwände eben ausgebildet sind und daß die Schwenkachsen parallel zur Ebene der Trennwände und quer zur Strömungsrichtung angeordnet sind. Bei einer derartigen Ausbildung können benachbarte Trennwände gegensinnig zueinander verschwenkt werden, wodurch sich eine zyklische Anhebung und Absenkung des Flüssigkeitsspiegels in benachbarten durch Trennwände getrennten Kammern ergibt. Gleichzeitig mit der Verschwenkung wird nun jeweils alternativ ein Überlauf oder ein Unterlauf ausgebildet, wodurch sich ein gerichteter Transport der beiden Phasen in entgegengesetzter Richtung ergibt und eine Abtrennung von relativ reinen Phasen ermöglicht wird.

In einfacher Weise können hiebei die Trennwände geknickt oder gekrümmt als Fläche mit zueinander parallelen Erzeugenden ausgebildet sind, wobei die Schwenkachsen in der Fläche oder parallel zu den Erzeugenden angeordnet sind. In allen diesen Fällen kann mit einem Schubstangenantrieb das Auslangen gefunden werden, wobei zwei Schubstangen gegenläufig zueinander, beispielsweise von dem gleichen Antriebsmotor, über einen Kurbeltrieb antreibbar sind. Die Ausbildung ist hiebei mit Vorteil so getroffen, daß zwei Schubstangen vorgesehen sind, daß in Strömungsrichtung jede zweite Trennwand mit einer gemeinsamen Schubstange verbunden ist und daß jede Schubstange gegenläufig zur anderen Schubstange antreibbar ist.

Um ein unerwünschtes Überströmen im Bereich der Phasengrenzflächen und eine Ausbildung unterschiedlicher Flüssigkeitniveaus in benachbarten Kammern sicherzustellen, tragen in vorteilhafter Weise die Trennwände an ihren Seitenrändern und der Unterkante Dichtungselemente, insbesondere an den Seitenrändern wischerförmige und an der Unterkante wulstförmige Dichtungselemente.

Zu beiden Stirnseiten der erfindungsgemäßen Einrichtung können relativ reine Phasen abgezogen werden, wofür mit Vorteil an einer Stirnseite des Beckens eine Kombination von Unterlauf- und Überlaufwehr und auf der gegenüberliegenden Stirnseite ein Überlaufwehr angeordnet ist.

In besonders vorteilhafter Weise kann die Ausbildung so weitergebildet sein, daß zwecks Förderung der Koaleszenz Maschendrahtpakete zwischen den beweglichen Trennwänden angeordnet sind, wobei die intermittierende Auf- und Abbewegung der Flüssigkeiten koaleszenzunterstützend wirkt, wobei vorzugsweise zwecks Spaltung des emulgierten Teiles der Phasen Elektrodenpakete zwischen den beweglichen Trennwänden bzw. im Zulauf zur ersten zwischen beweglichen Trennwänden befindlichen Kammer angeordnet sind, wobei die intermittierende Auf- und Abbewegung der Flüssigkeiten einen Reinigungseffekt an diesen Elektroden ergibt.

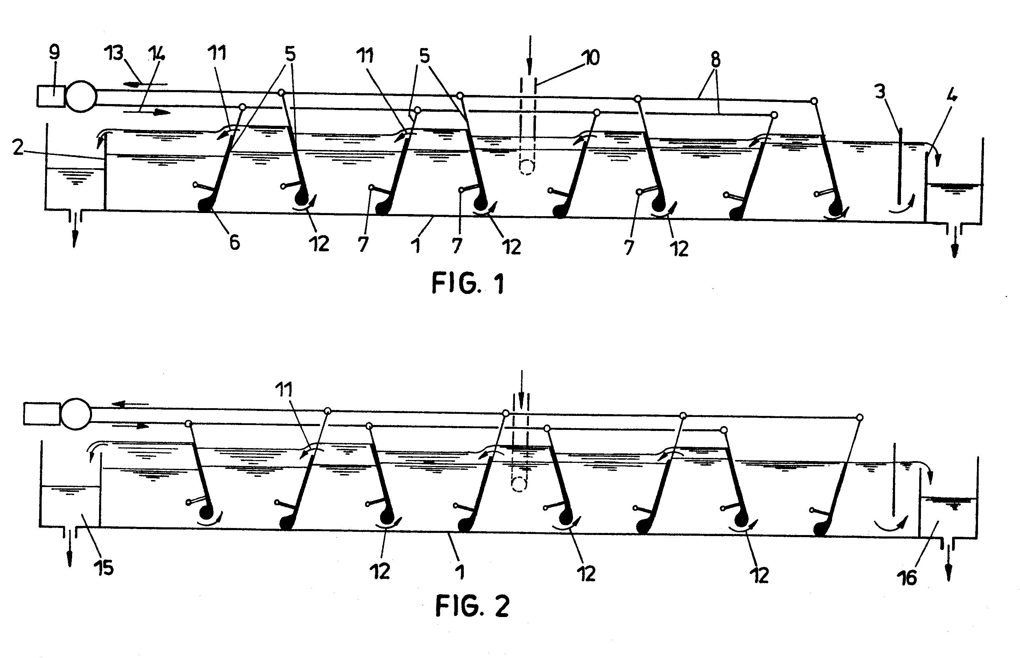

Die Erfindung wird nachfolgend an Hand eines in der Zeichnung dargestellten Ausführungsbeispieles näher erläutert. In dieser zeigen: Fig. 1 einen Längsschnitt durch eine erfindungsgemäße Einrichtung mit schwenkbaren Trennwänden in einer Endstellung der Schwenkbewegung der Trennwände und Fig. 2 eine analoge Ansicht wie Fig. 1 bei Verschwenkung der Trennwände in die andere Schwenkendstellung.

In Fig. 1 und 2 ist mit 1 ein Abscheidebecken bezeichnet. Ein derartiges Abscheidebecken kann als prismatisches langgezogenes Becken ausgebildet sein. An einer Stirnseite dieses Beckens ist ein Überlaufwehr 2 und an der gegenüberliegenden Stirnseite des Beckens ein Unterlaufwehr 3 angeordnet. Dem Unterlaufwehr 3 ist wiederum ein Überlaufwehr 4 für die kontinuierliche Abführung der schwereren Flüssigkeit nachgeschaltet.

Im Inneren des Beckens sind schwenkbare Trennwände 5 angeordnet, welche an ihrer Unterkante einen elastischen Dichtungswulst 6 tragen. Die Trennwände 5 sind um Achsen 7 schwenkbar gelagert, wobei diese Achse 7 parallel zur Ebene der schwenkbaren Trennwände und außerhalb der Ebene derselben angeordnet ist. Durch diese exzentrische Anordnung der Schwenkachsen 7 wird, wie aus dem Vergleich der Fig. 1 mit der Fig. 2 ersichtlich ist, in einer Schwenklage erreicht, daß benachbarte Trennwände abwechselnd mit ihrem elastischen Dichtungswulst an der Unterkante des Beckens anliegen und von der Unterkante des Beckens abgehoben werden. Der Antrieb der schwenkbaren Trennwände 5 erfolgt über Schubstangen 8, welche von einem Motor 9 zu gegenläufiger Bewegung angetrieben werden. Die Aufgabe der zu trennenden Phasen erfolgt über eine Aufgabeeinrichtung 10, ungefähr im mittigen Bereich des Abscheidebeckens 1.

In Fig. 1 ist jeweils jede zweite Trennwand 5 so verschwenkt, daß sie mit ihrem elastischen Wulst am Boden des Abscheidebeckens anliegt, wobei gleichzeitig die Oberkante der gleichen Trennwand relativ zu ihrer entgegengesetzten Schwenklage abgesenkt ist. Durch die Bewegung benachbarter Trennwände zueinander ergibt sich eine Veränderung des Flüssigkeitsspiegels und die spezifisch leichtere Phase kann in Richtung der Pfeile 11 abströmen. Gleichzeitig wird auf Grund des von der benachbarten Trennwand 5 zum Boden des Absatzbeckens freigegebenen Durchflußquerschnittes in Richtung des Pfeiles 12 eine Abförderung der spezifisch schwereren Phase bewirkt.

Wie sich aus Fig. 2 ergibt, ist bei gegenläufiger Verschiebung der Schubstangen in die andere Endstellung die Transportrichtung 11 für die leichtere Phase die gleiche und ebenso bleibt die Transportrichtung 12 für die schwere Phase aufrecht. Es ergibt sich somit durch gegenläufige Verschiebung der Schubstangen im Sinne der Pfeile 13 und 14 abwechselnd eine Ausbildung von Kammern mit unterschiedlicher Füllhöhe, wobei auf Grund der gleichförmigen Strömungsrichtung 11 in Richtung zum Ablauf 15 für die leichtere Phase und der Strömungsrichtung 12 in Richtung zum Ablauf 16 für die schwerere Phase ein guter Trenneffekt bei kurzer Baulänge erzielt werden kann. Der kontinuierliche Betrieb läßt sich hiebei ohne Verstellung des Überlaufwehres bzw. des Unterlaufwehres an den Stirnseiten des Beckens aufrechterhalten und es sind keine aufwendigen Regelungen für den Betrieb der Einrichtung erforderlich.

Zur Verbesserung des Trennungseffektes der Phasen können in den einzelnen Kammern zwischen den beweglichen Platten Gestrickpakete, wie beispielsweise Maschendrahtgewebepakte, angeordnet werden, um die Koaleszenz bzw. das Tropfenwachstum zu fördern. Zwischen benachbarten schwenkbaren Trennwänden können auch Elektrodenpakete zur Spaltung von Emulsionen angeordnet werden, wobei in besonders einfacher Weise die Trennwände selbst leitfähig ausgebildet sein können und unmittelbar als Elektrode eingesetzt werden können. In diesen Fällen kann eine sich verbrauchende Elektrode am Boden des Beckens festgelegt werden.

## Patentansprüche

1. Einrichtung zum kontinuierlichen Trennen von flüssigen Phasen unterschiedlicher Dichte, dadurch gekennzeichnet, daß in einem Becken (1) quer zur Strömungsrichtung orientierte Trennwände (5) angeordnet sind, daß in Strömungsrichtung benachbarte Trennwände gegenläufig heb- und senkbar und abwechselnd zueinander und voneinander weg bewegbar oder gegenläufig schwenkbar antreibbar sind, daß der Hubantrieb bzw. die Schwenkachsen (7) der Trennwände (5) so angeordnet sind, daß in einer Endlage des Schwenkbereiches oder Hubes der Trennwände die Unterkanten der Trennwände (5) am Boden des Beckens (1) dichtend anliegen und in anderen Schwenkstellungen oder Hubstellungen einen Durchflußquerschnitt freigeben und daß zu beiden Stirnseiten des Beckens Abflüsse für die getrennten Phasen angeordnet sind.

2. Einrichtung nach Anspruch 1, dadurch gekennzeichnet, daß die Trennwände (5) eben ausgebildet sind und daß die Schwenkachsen (7) parallel zur Ebene der Trennwände und quer zur Strömungsrichtung angeordnet sind.

3. Einrichtung nach Anspruch 1 oder 2, dadurch gekennzeichnet, daß die Trennwände (5) geknickt oder gekrümmt als Fläche mit zueinander parallelen Erzeugenden ausgebildet sind und daß die Schwenkachsen (7) in der Fläche oder parallel zu den Erzeugenden angeordnet sind.

4. Einrichtung nach Anspruch 1, 2 oder 3, dadurch gekennzeichnet, daß zwei Schubstangen (8) vorgesehen sind, daß in Strömungsrichtung jede zweite Trennwand (5) mit einer gemeinsamen Schubstange verbunden ist und daß jede Schubstange gegenläufig zur anderen Schubstange antreibbar ist.

5. Einrichtung nach einem der Ansprüche 1 bis 4, dadurch gekennzeichnet, daß die Trennwände (5) an ihren Seitenrändern und der Unterkante Dichtungselemente (6), insbesondere an den Seitenrändern wischerförmige und an der Unterkante wulstförmige Dichtungselemente (6), tragen.

6. Einrichtung nach einem der Ansprüche 1 bis 5, dadurch gekennzeichnet, daß die Aufgabeeinrichtung (10) für die zu trennenden Phasen mittig zwischen den zu beiden Stirnseiten des Beckens (1) angeordneten Abflüssen angeordnet ist.

7. Einrichtung nach einem der Ansprüche 1 bis 6, dadurch gekennzeichnet, daß an einer Stirnseite des Beckens (1) eine Kombination von Unterlauf- (3) und Überlaufwehr (4) und auf der gegenüberliegenden Stirnseite ein Überlaufwehr (2) angeordnet ist.

8. Einrichtung nach einem der Ansprüche 1 bis 7, dadurch gekennzeichnet, daß zwecks Förderung der Koaleszenz Maschendrahtpakete zwischen den beweglichen Trennwänden (5) angeordnet sind, wobei die intermittierende Auf- und Abbewegung der Flüssigkeiten koaleszenzunterstützend wirkt.

9. Einrichtung nach einem der Ansprüche 1 bis 8, dadurch gekennzeichnet, daß zwecks Spaltung des emulgierten Teiles der Phasen Elektrodenpakete zwischen den beweglichen Trennwänden bzw. im Zulauf zur ersten zwischen beweglichen Trennwänden (5) befindlichen Kammer angeordnet sind, wobei die intermittierende Auf- und Abbewegung der Flüssigkeiten einen Reinigungseffekt an diesen Elektroden ergibt.

FIG. 1

FIG. 2

86890240 4